# EUROPEAN PATENT SPECIFICATION

(11) **EP 0 962 944 B1**
(45) Date of publication and mention of the grant of the patent: **11.05.2005**
(21) Application number: 99302035.3
(22) Date of filing: 16.03.1999
(51) Int. Cl.: H01B 1/24, C08K 3/04

(54) **Cable semiconducting shield compositions**
Halbleitfähige Kabel-Schirm-Zusammensetzungen
Compositions d'écran semiconducteur pour câble

(30) Priority: 26.05.1998 US 84638
(43) Date of publication of application: 08.12.1999
(73) Proprietor: UNION CARBIDE CHEMICALS & PLASTICS TECHNOLOGY CORPORATION, Danbury, Connecticut 06817-0001 (US)
(72) Inventor: Du, Luke Chi Chung, New Jersey 07652 (US); Ginger, Rodney Essex, Beaconsfield, Quebec H9W 2L1 (CA); Mendelsohn, Alfred, Brooklyn, New York 11230 (US)
(74) Representative: Hayes, Adrian Chetwynd

(56) References cited:
- EP-A- 0 364 848
- WO-A-98/14516
- US-A- 4 342 880

## Description

### Technical Field

This invention relates to a power cable having a semiconducting shield and moisture cured insulation.

### Background Information

A typical electric power cable generally comprises one or more conductors in a cable core that is surrounded by several layers of polymeric materials including a first semiconducting shield layer (conductor or strand shield), an insulating layer, a second semiconducting shield layer (insulation shield), a metallic tape or wire shield, and a protective jacket. The outer semiconducting shield can be either bonded to the insulation or strippable, with most applications using strippable shields. Additional layers within this construction such as moisture impervious materials are often incorporated.

Polymeric semiconducting shields have been utilized in multilayered power cable construction for many decades. Generally, they are used to fabricate solid dielectric power cables rated for voltages greater than 1 kilo Volt (kV). These shields are used to provide layers of intermediate conductivity between the high potential conductor and the primary insulation, and between the primary insulation and the ground or neutral potential. The volume resistivity of these semiconducting materials is typically in the range of 10⁻¹ to 10⁸ ohm-cm when measured on a completed power cable construction using the methods described in ICEA S-66-524, section 6.12, or IEC 60502-2 (1997), Annex C. Typical strippable shield compositions contain a polyolefin, such as ethylene/vinyl acetate copolymer with a high vinyl acetate content, conductive carbon black, an organic peroxide crosslinking agent, and other conventional additives such as a nitrile rubber, which functions as a strip force reduction aid, processing aids, and antioxidants. These compositions are usually prepared in granular or pellet form. Polyolefin formulations such as these are disclosed in United States patent 4,286,023 and European Patent Application 420 271. The shield composition is, typically, introduced into an extruder where it is co-extruded around an electrical conductor at a temperature lower than the decomposition temperature of the organic peroxide to form a cable. The cable is then exposed to higher temperatures at which the organic peroxide decomposes to provide free radicals, which crosslink the polymer.

Polyethylenes, which are typically used as the polymeric component in the insulation layer, can be made moisture curable by making the resin hydrolyzable, which is accomplished by adding hydrolyzable groups such as -Si(OR)₃ wherein R is a hydrocarbyl radical to the resin structure through copolymerization or grafting. Suitable crosslinking agents are organic peroxides such as dicumyl peroxide; 2,5-dimethyl- 2,5-di(t-butylperoxy)hexane; t-butyl cumyl peroxide; and 2,5-dimethyl-2,5-di(t-butylperoxy)hexane-3. Dicumyl peroxide is preferred. Hydrolyzable groups can be added, for example, by copolymerizing ethylene with an ethylenically unsaturated compound having one or more -Si(OR)₃ groups such as vinyltrimethoxysilane, vinyltriethoxysilane, and gamma-methacryloxypropyltrimethoxy-silane or grafting these silane compounds to the resin in the presence of the aforementioned organic peroxides. The hydrolyzable resins are then crosslinked by moisture in the presence of a silanol condensation catalyst such as dibutyltin dilaurate, dioctyltin maleate, dibutyltin diacetate, stannous acetate, lead naphthenate, and zinc caprylate. Dibutyltin dilaurate is preferred. Examples of hydrolyzable copolymers and hydrolyzable grafted copolymers are ethylene/vinyltrimethoxy silane copolymer, ethylene/gamma-methacryloxypropyltrimethoxy silane copolymer, vinyltrimethoxy silane grafted ethylene/ethyl acrylate copolymer, vinyltrimethoxy silane grafted linear low density ethylene/1-butene copolymer, and vinyltrimethoxy silane grafted low density polyethylene.

In applications where moisture cured insulation is used, it is desirable to provide a moisture cured strippable semiconducting shield to protect the insulation. The shield composition would then be prepared in the same manner as the moisture cured insulation as outlined above. Unfortunately, shield compositions, which could be moisture cured, were found to have a tendency to scorch, i.e., to prematurely crosslink during extrusion. In addition to solving the scorch problem, the shield had to be easily strippable by hand or with the aid of an appropriate tool.

Further, the use of a peroxide crosslinkable insulation shield over a moisture curable insulation is not considered viable because of the incompatibility of the processing requirements for each.. Typically, the peroxide system utilizes higher operating temperatures during the cure cycle, and these high temperatures interfere with the dimensional stability of the "uncured" moisture curable insulation. The upshot is that the peroxide system requires a pressurized curing tube, which is an integral part of the extrusion process, while the moisture curable insulation is cured in a post extrusion stage. It was also found that while crosslinking via a peroxide did improve scorch, it did not enhance strippability.

### Disclosure of the Invention

An object of this invention, therefore, is to provide a cable having a moisture cured insulation layer surrounded by a semiconducting shield having improved strippability, the shield being made up of a scorch resistant composition. Other objects and advantages will become apparent hereinafter.

According to the invention, such a cable has been discovered. The cable comprises an electrical conductor or a core of electrical conductors surrounded by a moisture cured insulation layer, which is surrounded by, and contiguous with, a semiconducting layer, said semiconducting layer comprising:
(a) a copolymer of ethylene and an unsaturated ester selected from the group consisting of vinyl esters, acrylic acid esters, and methacrylic acid esters wherein the ester is present in the copolymer in an amount of about 20 to about 55 percent by weight;
(b) a conductive carbon black; and, optionally,
(c) a copolymer of acrylonitrile and butadiene wherein the acrylonitrile is present in an amount of about 30 to about 60 percent by weight based on the weight of the copolymer or a silicone rubber with the proviso that the polymeric components are partially crosslinked in an amount of about 15 to about 35 percent.

### Description of the Preferred Embodiment(s)

The resins most commonly used in semiconducting shields are elastomers of varying degrees of crystallinity from amorphous through low and medium crystallinity, preferably copolymers of ethylene and unsaturated esters having an ester content of at least about 20 percent by weight based on the weight of the copolymer. The ester content is often as high as 55 percent by weight, and, at these levels, the primary monomer is the ester. The preferred range of ester content is about 35 to about 55 percent by weight. The percent by weight is based on the total weight of the copolymer. Examples of the unsaturated esters are vinyl esters and acrylic and methacrylic acid esters. The ethylene/unsaturated ester copolymers are usually made by conventional high pressure processes. These high pressure processes are typically run at pressures above 15,000 psi (pounds per square inch). The copolymers can have a density in the range of 0.900 to 0.990 gram per cubic centimeter, and preferably have a density in the range of 0.920 to 0.970 gram per cubic centimeter. The copolymers can also have a melt index in the range of about 10 to about 100 grams per 10 minutes, and preferably have a melt index in the range of about 20 to about 50 grams per 10 minutes. Melt index is determined under ASTM D-1238, Condition E. It is measured at 190° C and 2160 grams.

The ester can have about 4 to about 20 carbon atoms, and preferably has about 4 to about 7 carbon atoms. Examples of vinyl esters are vinyl acetate, vinyl butyrate, vinyl pivalate, vinyl neononanoate, vinyl neodecanoate, and vinyl 2-ethylhexanoate. Vinyl acetate is preferred. Examples of acrylic and methacrylic acid esters are lauryl methacrylate; myristyl methacrylate; palmityl methacrylate; stearyl methacrylate; 3-methacryloxy-propyltrimethoxysilane; 3-methacryloxypropyltriethoxysilane; cyclohexyl methacrylate; n-hexylmethacrylate; isodecyl methacrylate; 2-methoxyethyl methacrylate; tetrahydrofurfuryl methacrylate; octyl methacrylate; 2-phenoxyethyl methacrylate; isobornyl methacrylate; isooctylmethacrylate; octyl methacrylate; isooctyl methacrylate; oleyl methacrylate; ethyl acrylate; methyl acrylate; t-butyl acrylate; n-butyl acrylate; and 2-ethylhexyl acrylate. Methyl acrylate, ethyl acrylate, and n- or t-butyl acrylate are preferred. In the case of alkyl acrylates and methacrylates, the alkyl group can have about 1 to about 8 carbon atoms, and preferably has about 1 to about 4 carbon atoms. As noted above, the alkyl group can be substituted with an oxyalkyltrialkoxysilane, for example.

It is preferred that polyethylene be included among the components of the semiconducting shield. The polyethylene can be a homopolymer of ethylene or a copolymer of ethylene and an alpha-olefin. It can have a high, medium, or low density. Useful comonomers are mentioned below. Even more preferred is a mixture of LLDPE and VLDPE, which is also described below. The ethylene polymers useful in subject invention are preferably produced in the gas phase. They can also be produced in the liquid phase in solutions or slurries by conventional techniques. They can be produced by high pressure or low pressure processes. Low pressure processes are typically run at pressures below 1000 psi whereas, as noted above, high pressure processes are typically run at pressures above 15,000 psi. Typical catalyst systems, which can be used to prepare these polymers are magnesium/titanium based catalyst systems, which can be exemplified by the catalyst system described in United States patent 4,302,565; vanadium based catalyst systems such as those described in United States patents 4,508,842 and 5,332,793; 5,342,907; and 5,410,003; a chromium based catalyst system such as that described in United States patent 4,101,445; a metallocene catalyst system such as that described in United States patents 4,937,299 and 5,317,036; or other transition metal catalyst systems. Many of these catalyst systems are often referred to as Ziegler-Natta catalyst systems. Catalyst systems, which use chromium or molybdenum oxides on silica-alumina supports. are also useful. Typical processes for preparing the polymers are also described in the aforementioned patents. Typical in situ polymer blends and processes and catalyst systems for providing same are described in United States Patents 5,371,145 and 5,405,901. A conventional high pressure process is described in Introduction to Polymer Chemistry, Stille, Wiley and Sons, New York, 1962, pages 149 to 151. A typical catalyst for high pressure processes is an organic peroxide. The processes can be carried out in a tubular reactor or a stirred autoclave. The elastomers other than the ethylene polymers are also prepared by conventional processes.

Melt index is determined in accordance with ASTM D-1238, Condition E, measured at 190 degrees C.

The linear low density polyethylene (LLDPE) can have a density in the range of 0.916 to 0.925 gram per cubic centimeter. It can be a copolymer of ethylene and one or more alpha-olefins having 3 to 12 carbon atoms, and preferably 3 to 8 carbon atoms. The melt index can be in the range of about 1 to about 20 grams per 10 minutes, and is preferably in the range of about 3 to about 8 grams per 10 minutes. The preferred alpha-olefins can be exemplified by propylene, 1-butene, 1-hexene, 4-methyl-1-pentene, and 1-octene, and the catalysts and processes can be the same as those mentioned above subject to variations necessary to obtain the desired densities and melt indices. Note that the VLDPE is also linear.

The very low density polyethylene (VLDPE) can be a copolymer of ethylene and one or more alpha-olefins having 3 to 12 carbon atoms and preferably 3 to 8 carbon atoms. Preferred alpha-olefins are mentioned above. The density of the VLDPE can be in the range of 0.860 to 0.915 gram per cubic centimeter. It can be produced using the catalysts and processes mentioned above. The melt index of the VLDPE can be in the range of about 0.1 to about 20 grams per 10 minutes and is preferably in the range of about 0.3 to about 5 grams per 10 minutes. The portion of the VLDPE attributed to the comonomer(s), other than ethylene, can be in the range of about 1 to about 49 percent by weight based on the weight of the copolymer and is preferably in the range of about 15 to about 40 percent by weight. A third comonomer can be included, e.g., another alpha-olefin or a diene such as ethylidene norbornene, butadiene, 1,4-hexadiene, or a dicyclopentadiene. The third comonomer can be present in an amount of about 1 to 15 percent by weight based on the weight of the copolymer and is preferably present in an amount of about 1 to about 10 percent by weight. It is preferred that the copolymer contain two or three comonomers inclusive of ethylene.

Component (b): In order to provide a semiconducting shield it is necessary to incorporate conductive particles into the composition. These conductive particles are generally provided by particulate carbon black, which is referred to above. Useful carbon blacks can have a surface area of about 50 to about 1000 square meters per gram. The surface area is determined under ASTM D 4820-93a (Multipoint B.E.T. Nitrogen Adsorption). The carbon black can be used in the semiconducting shield composition in an amount of about 20 to about 60 percent by weight based on the weight of the composition, and is preferably used in an amount of about 25 to about 45 percent by weight. Both standard conductivity and high conductivity carbon blacks can be used with standard conductivity blacks being preferred. Examples of conductive carbon blacks are the grades described by ASTM N550, N472, N351, N110, and acetylene black.

Component (c) is optional. It can be a copolymer of acrylonitrile and butadiene wherein the acrylonitrile is present in an amount of about 30 to about 60 percent by weight based on the weight of the copolymer, and is preferably present in an amount of about 40 to about 50 percent by weight. This copolymer is also known as a nitrile rubber or an acrylonitrile/butadiene copolymer rubber. The density can be. for example, 0.98 gram per cubic centimeter and the Mooney Viscosity can be (ML 1+4) 50. Component (c) can also be a silicone rubber.

For each 100 parts by weight of component (a), i.e., the unsaturated ester, the other components can be present in about the following values (in parts by weight):

| component | broad range | preferred range |
|---|---|---|
| (b) carbon black | 30 to 120 | 90 to 100 |
| (c) nitrile rubber* or | 10 to 60 | 15 to 45 |
| silicone rubber | 1 to 10 | 3 to 8 |
| LLDPE** | 10 to 45 | 15 to 30 |
| VLDPE** | 15 to 55 | 25 to 45 |
| weight ratio of LLDPE to VLDPE | 0.2:1 to 0.8:1 | 0.4:1 to 0.6:1 |

| | | |
|---|---|---|
| * nitrile rubber is a copolymer of acrylonitrile and butadiene. | | |
| ** generally, any polyethylene will be suitable; however, the combination of LLDPE and VLDPE is preferred. The polyethylene in toto can be present in an amount of about 25 to about 100 parts by weight, and is preferably present in an amount of about 40 to about 75 parts by weight. | | |

The polymers, i.e., components (a) and (c), and polyethylene are partially crosslinked. This is accomplished in a conventional manner with an organic peroxide or irradiation, the latter being preferred. The amount of organic peroxide used can be in the range of about 0.15 to about 0.8 part by weight of organic peroxide for each 100 parts by weight of component (a), and is preferably in the range of about 0.3 to about 0.6 part by weight. Organic peroxide crosslinking temperatures can be in the range of about 150 to about 250 degrees C and are preferably in the range of about 170 to about 210 degrees C.

Examples of organic peroxides useful in crosslinking are dicumyl peroxide; lauroyl peroxide; benzoyl peroxide; tertiary butyl perbenzoate; di(tertiary-butyl) peroxide: cumene hydroperoxide; 2,5-dimethyl-2,5-di(t-butyl-peroxy)hexyne-3; 2,5-dimethyl-2,5-di(t-butyl-peroxy)hexane; tertiary butyl hydroperoxide; isopropyl percarbonate; and alpha,alpha'-bis(tertiary-butylperoxy)diisopropylbenzene.

The preferred form of crosslinking is by irradiation, typically by electron beam. The composition in pellet form is subjected to an electron beam at a given dose rate or exposed to a Gamma source of specific strength for a given period of time to impart a specific dose rate of radiation.

As noted, the polymeric components of the shield composition are only partially crosslinked, i.e., the amount of irradiation or the amount of organic peroxide is limited to provide crosslinking in an amount sufficient to improve the physical properties the composition, but still maintain its processability under conventional extrusion conditions. Processability can also be defined in terms of the viscosity of the composition at a given shear rate or rates and temperature after partial crosslinking. Complete crosslinking would render the composition intractable. An example of a composition before crosslinking would have a viscosity measured at 175 degrees C and 4000 poise at a shear rate of 1000 sec⁻¹, and after partial crosslinking would have a viscosity in the range of about 4500 to about 6000 poise at the same shear rate depending on the degree of crosslinking. Partial crosslinking can be in the range of about 15 to about 35 percent, and is preferably in the range of about 20 to about 30 percent. These values are based on the gel fraction determined by using a standard solvent extraction test (ASTM D 2765). Note that a "fully" crosslinked semiconducting material would have a gel fraction of about 75 to about 85 percent.

Conventional additives, which can be introduced into the composition, are exemplified by antioxidants, coupling agents, ultraviolet absorbers or stabilizers, antistatic agents, pigments, dyes, nucleating agents, reinforcing fillers or polymer additives, slip agents, plasticizers, processing aids, lubricants, viscosity control agents, tackifiers, anti-blocking agents, surfactants, extender oils, metal deactivators, voltage stabilizers, flame retardant fillers and additives, crosslinking agents, boosters, and catalysts, and smoke suppressants. Additives and fillers can be added in amounts ranging from less than about 0.1 to more than about 50 percent by weight based on the weight of the composition.

Examples of antioxidants are: hindered phenols such as tetrakis[methylene(3,5-di-tert- butyl-4-hydroxyhydro-cinnamate)]methane, bis[(beta-(3,5-ditert-butyl-4-hydroxybenzyl)-methylcarboxyethyl)]sulphide, 4,4'-thiobis(2-methyl-6-tert-butylphenol), 4,4'-thiobis(2-tert-butyl-5-methylphenol), 2,2'-thiobis(4-methyl-6-tert-butylphenol), and thiodiethylene bis(3,5-di-tert-butyl-4-hydroxy)hydrocinnamate; phosphites and phosphonites such as tris(2,4-di-tert-butylphenyl)phosphite and di-tert-butylphenyl-phosphonite; thio compounds such as dilaurylthiodipropionate, dimyristylthiodipropionate, and distearylthiodipropionate; various siloxanes; and various amines such as polymerized 2,2,4-trimethyl-1,2-dihydroquinoline, 4,4'-bis(alpha,alpha-demthylbenzyl)diphenylamine, and alkylated diphenylamines. Antioxidants can be used in amounts of about 0.1 to about 5 percent by weight based on the weight of the composition.

Compounding can be effected in a conventional melt/mixer or in a conventional extruder, and these terms are used in this specification interchangeably. Generally, the conductive shield composition is prepared in a melt/mixer and then pelletized using a pelletizer attachment or an extruder adapted for pelletizing. Both the melt/mixer, as the name implies, and the extruder, in effect, have melting and mixing zones although the various sections of each are known to those skilled in the art by different names.. The semiconducting shield composition of the invention can be prepared in various types of melt/mixers and extruders such as a Brabender™ mixer, Banbury™ mixer, a roll mill, a Buss™ co-kneader, a biaxial screw kneading extruder, and single or twin screw extruders. A description of a conventional extruder can be found in United States patent 4,857,600. In addition to melt/mixing, the extruder can coat a wire or a core of wires. An example of co-extrusion and an extruder therefor can be found in United States patent 5,575,965. A typical extruder has a hopper at its upstream end and a die at its downstream end. The hopper feeds into a barrel, which contains a screw. At the downstream end, between the end of the screw and the die, is a screen pack and a breaker plate. The screw portion of the extruder is considered to be divided up into three sections, the feed section, the compression section, and the metering section, and two zones, the back heat zone and the front heat zone, the sections and zones running from upstream to downstream. In the alternative, there can be multiple heating zones (more than two) along the axis running from upstream to downstream. If it has more than one barrel, the barrels are connected in series. The length to diameter ratio of each barrel is in the range of about 15:1 to about 30:1. In wire coating, where the material is crosslinked after extrusion, the die of the crosshead feeds directly into a heating zone, and this zone can be maintained at a temperature in the range of about 130°C to about 260°C, and preferably in the range of about 170°C to about 220°C.

The advantages of the invention are that the degree of crosslinking is reduced; the shield is deformation resistant; drying and porosity do not pose problems; the composition is scorch resistant; the shield made from the composition is easily strippable from the insulation; and there is no need for special high conductive carbon blacks.

The term "surrounded" as it applies to a substrate being surrounded by an insulating composition, jacketing material, or other cable layer is considered to include extruding around the substrate; coating the substrate; or wrapping around the substrate as is well known by those skilled in the art. The substrate can include, for example, a core including a conductor or a bundle of conductors, or various underlying cable layers as noted above.

All molecular weights mentioned in this specification are weight average molecular weights unless otherwise designated.

The invention is illustrated by the following example.

### Example

The following compositions (Table 1) are pelletized in a conventional manner, and the pellets are exposed to an electron beam at dose rates of 1 to 4 MegaRads. Partial crosslinking is effected in the range of 20 to 35 percent.

**Table 1**

| (parts by weight) | | | |
|---|---|---|---|
| Component | Composition 1 | Composition 2 | Composition 3 |
| ethylene/ vinyl acetate copolymer (28 wt % vinyl acetate) | 100 | 100 | 100 |
| LLDPE (density = 0.921 g/cc) | 22.7 | 17 | 28.4 |
| VLDPE (density = 0.905 g/cc) | 34 | 25.6 | 42.6 |
| Conductive carbon black | 96.6 | 96.6 | 96.6 |
| acrylonitrile/ butadiene copolymer rubber (35 wt % acrylonitrile) | 28.4 | 42.6 | 28.4 |
| antioxidant | 2.3 | 2.3 | 2.3 |
| wt ratio of LLDPE to VLDPE | 0.67:1 | 0.67:1 | 0.67:1 |

**Table 2**

| Composition 1 | tensile strength (peak stress) (psi) | elongation (%) | peel strength (force/1.27 cm (0.5 inch) strip) (psi) | volume resistivity (ohm-cm) |
|---|---|---|---|---|
| unexposed | 6.21 MPa (900) | 500 | ---- | ---- |
| | | | | |
| 1 MegaRad | 8.76 MPa (1270) | 422 | 17.93 kPa (2.6) | 30 |
| | | | | |
| 2 MegaRads | 9.10 MPa (1320) | 353 | 21.37 kPa (3.10) | 58 |
| | | | | |
| 3 MegaRads | 10.30 MPa (1494) | 298 | 22.27 kPa (3.23) | 101 |
| | | | | |
| 4 MegaRads | 10.85 MPa (1573) | 230 | ---- | 122 |

The partially crosslinked compositions in pellet form are extruded into tape for physical testing. The tapes are smooth and thermoplastic. In the case of the strip test, pellets are made into plaques, and each plaque is sandwiched with a plaque of uncrosslinked insulation, the polymeric component of which is a copolymer of ethylene and vinyl trimethoxy silane, in a compression mold. The sandwiched plaque is placed in a water bath at 90 degrees C overnight to cure the insulation. Strips of the "cured" sandwiched material (1.27 cm (0.5 inch) in width) are prepared and the force required to strip the semiconductive layer from the insulation is measured. The results of various tests with respect to Composition 1 are given in Table 2. Additional tests on the semiconductive material include deformation resistance conducted at 90 degrees C using a force of 268.9 kPa (39 psi) to simulate conditions on a reel of cable during the curing process. Composition 1 has values of less than 10 percent. Composition 3 has values of less than 20 percent. Commercial semiconductive layers used to coat (jacket) insulation have values greater then 80 percent. It is also found that the electrical properties and heat aging are at commercially acceptable levels.

### Notes to Table 2:

1. Tensile strength (peak stress) is measured under ASTM D-638. The results are reported in MPa and pounds per square inch (psi)
2. Elongation is measured under ASTM D-638. The results are reported in percent.
3. Peel strength, the force required to strip the semicon layer from a moisture cured polyethylene insulation layer, is measured as follows: Two layers are prepared separately in a compression mold (0.762 mm (30 mils) semicon and 1.905 mm (75 mils) of insulation). The two layers are then combined as a sandwiched plaque in a compression mold (25.4 x 25.4 cm x 1.27 mm thick (10x10 inches x 50 mils thick)). Molding conditions are 5 minutes at 1.38 MPa (200 psi) at 180 degrees C, followed by 5 minutes at 20.68 MPa (3000 psi) at 180 degrees C. The sandwiched plaque is placed in a water bath at 70 degrees C for 24 hours to cure the insulation layer. On removal from the water bath the plaque is conditioned for 24 hours at room temperature.
   Strips of 5.08 cm (2 inches) in width are cut from the sandwiched plaque for testing. Separation of the two layers is initiated by hand before the insulation layer side is clamped onto a wheel assembly which is attached to one of the jaws of an Instron™ tensile testing machine. The semicon layer is clamped in the moveable jaw of the Instron™ tensile machine. As the separation of the jaws on the Instron™ machine is initiated, the wheel assembly rotates and the semicon layer is peeled from the insulation layer. The force required to peel one of the layers from the other is recorded. (The average force exerted over the length of the sample is taken). A minimum of three samples is used for the test and the average force of the three samples used. The results are reported in kPa and pounds of force per 0.5 inch strip.
4. Volume Resistivity is measured under ASTM D-257. The results are reported in ohm-centimeters.
5. Deformation resistance is measured under ICEA S 66-401. The results are reported in percent.

## Claims

1. A cable comprising an electrical conductor or a core of electrical conductors surrounded by a moisture cured insulation layer, which is surrounded by, and contiguous with, a semiconducting layer, said semiconducting layer comprising:
(a) a copolymer of ethylene and an unsaturated ester selected from the group consisting of vinyl esters, acrylic acid esters, and methacrylic acid esters wherein the ester is present in the copolymer in an amount of 20 to 55 percent by weight;
(b) a conductive carbon black; and, optionally,
(c) a copolymer of acrylonitrile and butadiene wherein the acrylonitrile is present in an amount of 30 to 60 percent by weight based on the weight of the copolymer or a silicone rubber;
the polymeric components being partially crosslinked in an amount of 15 to 35 percent.

2. The cable defined in claim 1 wherein the semiconducting layer additionally contains polyethylene.

3. The cable defined in claim 2 wherein the semiconducting layer comprises, for each 100 parts by weight of component (a):
(b) 25 to 100 parts by weight of a polyethylene having a density in the range of 0.860 to 0.960 gram per cubic centimeter;
(c) 30 to 120 parts by weight of a conductive carbon black; and, optionally,
(d) a copolymer of acrylonitrile and butadiene wherein the acrylonitrile is present in an amount of 20 to 55 percent by weight based on the weight of the copolymer or a silicone rubber;
the polymeric components being partially crosslinked in an amount of 15 to 35 percent.

4. The cable defined in claim 3 wherein component (b) is
(i) 10 to 45 parts by weight of a linear low density polyethylene having a density in the range of 0.916 to 0.960 gram per cubic centimeter; and
(ii) 15 to 55 parts by weight of very low density polyethylene having a density in the range of 0.860 to 0.915 gram per cubic centimeter,
wherein the weight ratio of component (i) to component (ii) is in the range of 0.2:1 to 0.8:1.

5. The cable defined in claim 4 wherein the weight ratio of component (i) to component (ii) is in the range of 0.4:1 to 0.6:1.

6. The cable defined in any one of claims 3 to 5 wherein the conductive carbon black is present in an amount of 90 to 120 parts by weight.

7. The cable defined in any one of claims 3 to 6 wherein the copolymer of acrylonitrile and butadiene is present in an amount of 10 to 60 parts by weight.

8. The cable defined in any one of the preceding claims wherein the ester is present in the copolymer of component (a) in an amount of 35 to 55 percent by weight.

9. The cable defined in claim 1 wherein the semiconducting layer comprises:
(a) a copolymer of ethylene and an unsaturated ester selected from the group consisting of vinyl esters, acrylic acid esters, and methacrylic acid esters wherein the ester is present in the copolymer in an amount of 35 to 55 percent by weight, and for each 100 parts by weight of component (a);
(b)15 to 30 parts by weight of a linear low density polyethylene having a density in the range of 0.916 to 0.960 gram per cubic centimeter;
(c) 25 to 45 parts by weight of a very low density polyethylene having a density of 0.860 to 0.915 gram per cubic centimeter;
(d) 30 to 120 parts by weight of a conductive carbon black; and
(e) 10 to 60 parts by weight of a copolymer of acrylonitrile and butadiene wherein the acrylonitrile is present in an amount of 35 to 55 percent by weight based on the weight of the copolymer;
(i) the weight ratio of component (b) to component(c) being in the range of 0.4:1 to 0.6:1; and
(ii) the polymeric components being partially crosslinked in an amount of 20 to 30 percent.

10. A composition comprising:
(a) a copolymer of ethylene and an unsaturated ester selected from the group consisting of vinyl esters, acrylic acid esters, and methacrylic acid esters wherein the ester is present in the copolymer in an amount of 20 to 55 percent by weight, and for each 100 parts by weight of component (a),
(b) 10 to 45 parts by weight of a linear low density polyethylene having a density in the range of 0.916 to 0.960 gram per cubic centimeter;
(c) 15 to 55 parts by weight of a very low density polyethylene having a density in the range of 0.860 to 0.915 gram per cubic centimeter;
(d) 30 to 120 parts by weight of a conductive carbon black; and, optionally,
(e) a copolymer of acrylonitrile and butadiene wherein the acrylonitrile is present in an amount of 20 to 55 percent by weight based on the weight of the copolymer or a silicone rubber;
(i) the weight ratio of component (b) to component (c) being in the range of 0.2:1 to 0.8:1 and
(ii) the polymeric components being partially crosslinked in an amount of 15 to 35 percent.

## Patentansprüche

1. Kabel mit einem elektrischen Leiter oder einem Kern aus elektrischen Leitern, der von einer feuchtigkeitsbeständigen Isolierschicht umgeben ist, die von einer halbleitenden Schicht umgeben ist und an diese angrenzt, wobei die halbleitende Schicht Folgendes umfaßt:
(a) ein Copolymer von Ethylen und einem ungesättigten Ester, der ausgewählt ist aus der aus Vinylestern, Acrylsäureestern und Methacrylsäureestern bestehenden Gruppe, wobei der Ester in dem Copolymer in einer Menge von 20 bis 55 Gew.-% vorhanden ist;
(b) einen leitfähigen Ruß; und fakultativ
(c) ein Copolymer von Acrylnitril und Butadien, wobei das Acrylnitril bezogen auf das Gewicht des Copolymers in einer Menge von 30 bis 60 Gew.-% vorhanden ist, oder einen Siliconkautschuk;
wobei die polymeren Komponenten in einem Anteil von 15 bis 35 Prozent teilweise vernetzt sind.

2. Kabel nach Anspruch 1, bei dem die halbleitende Schicht zusätzlich Polyethylen enthält.

3. Kabel nach Anspruch 2, bei dem die halbleitende Schicht auf jeweils 100 Gewichtsteile von Komponente (a) Folgendes umfaßt:
(b) 25 bis 100 Gewichtsteile eines Polyethylens mit einer Dichte im Bereich von 0,860 bis 0,960 g/cm_;
(c) 30 bis 120 Gewichtsteile eines leitfähigen Rußes; und fakultativ
(d) ein Copolymer von Acrylnitril und Butadien, wobei das Acrylnitril bezogen auf das Gewicht des Copolymers in einer Menge von 20 bis 55 Gew.-% vorhanden ist, oder einen Siliconkautschuk;
wobei die polymeren Komponenten in einem Anteil von 15 bis 35 Prozent teilweise vernetzt sind.

4. Kabel nach Anspruch 3, bei dem Komponente (b) Folgendes ist:
(i) 10 bis 45 Gewichtsteile eines linearen Polyethylens niedriger Dichte mit einer Dichte im Bereich von 0,916 bis 0,960 g/cm_; und
(ii) 15 bis 55 Gewichtsteile eines Polyethylens sehr niedriger Dichte mit einer Dichte im Bereich von 0,860 bis 0,915 g/cm_,
wobei das Gewichtsverhältnis von Komponente (i) zu Komponente (ii) im Bereich von 0,2:1 bis 0,8:1 liegt.

5. Kabel nach Anspruch 4, bei dem das Gewichtsverhältnis von Komponente (i) zu Komponente (ii) im Bereich von 0,4:1 bis 0,6:1 liegt.

6. Kabel nach einem der Ansprüche 3 bis 5, bei dem der leitfähige Ruß in einer Menge von 90 bis 120 Gewichtsteilen vorhanden ist.

7. Kabel nach einem der Ansprüche 3 bis 6, bei dem das Copolymer von Acrylnitril und Butadien in einer Menge von 10 bis 60 Gewichtsteilen vorhanden ist.

8. Kabel nach einem der vorhergehenden Ansprüche, bei dem der Ester in dem Copolymer von Komponente (a) in einer Menge von 35 bis 55 Gew.-% vorhanden ist.

9. Kabel nach Anspruch 1, bei dem die halbleitende Schicht Folgendes umfaßt:
(a) ein Copolymer von Ethylen und einem ungesättigten Ester, der ausgewählt ist aus der aus Vinylestern, Acrylsäureestern und Methacrylsäureestern bestehenden Gruppe, wobei der Ester in dem Copolymer in einer Menge von 35 bis 55 Gew.-% vorhanden ist, und auf jeweils 100 Gewichtsteile von Komponente (a) noch Folgendes:
(b) 15 bis 30 Gewichtsteile eines linearen Polyethylens niedriger Dichte mit einer Dichte im Bereich von 0,916 bis 0,960 g/cm_;
(c) 25 bis 45 Gewichtsteile eines Polyethylens sehr niedriger Dichte mit einer Dichte von 0,860 bis 0,915 g/cm_;
(d) 30 bis 120 Gewichtsteile eines leitfähigen Rußes; und
(e) 10 bis 60 Gewichtsteile eines Copolymers von Acrylnitril und Butadien, wobei das Acrylnitril bezogen auf das Gewicht des Copolymers in einer Menge von 35 bis 55 Gew.-% vorhanden ist;
(i) wobei das Gewichtsverhältnis von Komponente (b) zu Komponente (c) im Bereich von 0,4:1 bis 0,6:1 liegt, und
(ii) wobei die polymeren Komponenten in einem Anteil von 20 bis 30 Prozent teilweise vernetzt sind.

10. Zusammensetzung, die Folgendes umfaßt:
(a) ein Copolymer von Ethylen und einem ungesättigten Ester, der ausgewählt ist aus der aus Vinylestern, Acrylsäureestern und Methacrylsäureestern bestehenden Gruppe, wobei der Ester in dem Copolymer in einer Menge von 20 bis 55 Gew.-% vorhanden ist, und auf jeweils 100 Gewichtsteile von Komponente (a) noch Folgendes:
(b) 10 bis 45 Gewichtsteile eines linearen Polyethylens niedriger Dichte mit einer Dichte im Bereich von 0,916 bis 0,960 g/cm_;
(c) 15 bis 55 Gewichtsteile eines Polyethylens sehr niedriger Dichte mit einer Dichte im Bereich von 0,860 bis 0,915 g/cm_;
(d) 30 bis 120 Gewichtsteile eines leitfähigen Rußes; und fakultativ
(e) ein Copolymer von Acrylnitril und Butadien, wobei das Acrylnitril bezogen auf das Gewicht des Copolymers in einer Menge von 20 bis 55 Gew.-% vorhanden ist, oder einen Siliconkautschuk;
(i) wobei das Gewichtsverhältnis von Komponente (b) zu Komponente (c) im Bereich von 0,2:1 bis 0,8:1 liegt, und
(ii) wobei die polymeren Komponenten in einem Anteil von 15 bis 35 Prozent teilweise vernetzt sind.

## Revendications

1. Câble comportant un conducteur électrique ou une âme de conducteurs électriques, entouré(e) d'une couche de matériau isolant durci sous l'effet de l'humidité, laquelle couche isolante est entourée d'une couche contiguë de matériau semi-conducteur, laquelle couche semi-conductrice comporte :
a) un copolymère d'éthylène et d'un ester insaturé choisi dans l'ensemble formé par les esters de vinyle, les esters d'acide acrylique et les esters d'acide méthacrylique, lequel ester se trouve présent dans le copolymère en une quantité représentant de 20 à 55 % du poids de celui-ci,
b) un noir de carbone conducteur,
c) et en option, un copolymère d'acrylonitrile et de butadiène où l'acrylonitrile se trouve présent en une quantité représentant de 30 à 60 % du poids de ce copolymère, ou un élastomère de silicone,
les composants polymères étant partiellement réticulés, en une proportion de 15 à 35 %.

2. Câble conforme à la revendication 1, dans lequel la couche semi-conductrice contient en outre un polyéthylène.

3. Câble conforme à la revendication 2, dans lequel la couche semi-conductrice contient, pour 100 parties en poids de composant (a) :
b) 25 à 100 parties en poids d'un polyéthylène dont la masse volumique vaut de 0,860 à 0,960 g/cm³,
c) de 30 à 120 parties en poids d'un noir de carbone conducteur,
d) et en option, un copolymère d'acrylonitrile et de butadiène où l'acrylonitrile se trouve présent en une quantité représentant de 20 à 55 % du poids de ce copolymère, ou un élastomère de silicone,
les composants polymères étant partiellement réticulés, en une proportion de 15 à 35 %.

4. Câble conforme à la revendication 3, dans lequel le composant (b) est constitué :
i) de 10 à 45 parties en poids d'un polyéthylène linéaire basse densité dont la masse volumique vaut de 0,916 à 0,960 g/cm³,
ii) et de 15 à 55 parties en poids d'un polyéthylène très basse densité dont la masse volumique vaut de 0,860 à 0,915 g/cm³,
et la proportion pondérale du composant (i) au composant (ii) vaut de 0,2/1 à 0,8/1.

5. Câble conforme à la revendication 4, dans lequel la proportion pondérale du composant (i) au composant (ii) vaut de 0,4/1 à 0,6/1.

6. Câble conforme à l'une des revendications 3 à 5, dans lequel le noir de carbone conducteur se trouve présent en une quantité de 90 à 120 parties en poids.

7. Câble conforme à l'une des revendications 3 à 6, dans lequel le copolymère d'acrylonitrile et de butadiène se trouve présent en une quantité de 10 à 60 parties en poids.

8. Câble conforme à l'une des revendications précédentes, dans lequel, dans le composant copolymère (a), l'ester se trouve présent en une quantité représentant de 35 à 55 % du poids de ce copolymère.

9. Câble conforme à la revendication 1, dans lequel la couche semi-conductrice comporte :
a) un copolymère d'éthylène et d'un ester insaturé choisi dans l'ensemble formé par les esters de vinyle, les esters d'acide acrylique et les esters d'acide méthacrylique, lequel ester se trouve présent dans le copolymère en une quantité représentant de 35 à 55 % du poids de celui-ci, et pour 100 parties en poids de ce composant (a),
b) 15 à 30 parties en poids d'un polyéthylène linéaire basse densité dont la masse volumique vaut de 0,916 à 0,960 g/cm³,
c) 25 à 45 parties en poids d'un polyéthylène très basse densité dont la masse volumique vaut de 0,860 à 0,915 g/cm³,
d) 30 à 120 parties en poids d'un noir de carbone conducteur,
e) et 10 à 60 parties en poids d'un copolymère d'acrylonitrile et de butadiène où l'acrylonitrile se trouve présent en une quantité représentant de 35 à 55 % du poids de ce copolymère,
et dans lequel
i) la proportion pondérale du composant (b) au composant (c) vaut de 0,4/1 à 0,6/1,
ii) et les composants polymères sont partiellement réticulés, en une proportion de 20 à 30 %.

10. Composition qui comprend :
a) un copolymère d'éthylène et d'un ester insaturé choisi dans l'ensemble formé par les esters de vinyle, les esters d'acide acrylique et les esters d'acide méthacrylique, lequel ester se trouve présent dans le copolymère en une quantité représentant de 20 à 55 % du poids de celui-ci, et pour 100 parties en poids de ce composant (a),
b) 10 à 45 parties en poids d'un polyéthylène linéaire basse densité dont la masse volumique vaut de 0,916 à 0,960 g/cm³,
c) 15 à 55 parties en poids d'un polyéthylène très basse densité dont la masse volumique vaut de 0,860 à 0,915 g/cm³,
d) 30 à 120 parties en poids d'un noir de carbone conducteur,
e) et en option, un copolymère d'acrylonitrile et de butadiène où l'acrylonitrile se trouve présent en une quantité représentant de 20 à 55 % du poids de ce copolymère, ou un élastomère de silicone,
et dans laquelle
i) la proportion pondérale du composant (b) au composant (c) vaut de 0,2/1 à 0,8/1,
ii) et les composants polymères sont partiellement réticulés, en une proportion de 15 à 35 %.
